# EUROPEAN PATENT APPLICATION

(11) **EP 2 472 253 A1**
(43) Date of publication of application: **04.07.2012**
(21) Application number: 09848741.6
(22) Date of filing: 28.08.2009
(51) Int. Cl.: G01N 27/62

(54) **DETECTION DEVICE, AND PASS CONTROL SYSTEM**

(71) Applicant: Hitachi, Ltd., Chiyoda-ku Tokyo 100-8280 (JP)
(72) Inventor: SUZUKI, Yasutaka, Chiyoda-ku, Tokyo 100-8220 (JP); TAKADA, Yasuaki, Chiyoda-ku, Tokyo 100-8220 (JP); NAGANO, Hisashi, Chiyoda-ku, Tokyo 100-8220 (JP); SUGAYA, Masakazu, Chiyoda-ku, Tokyo 100-8220 (JP)
(86) International application number: PCT/JP2009/065082
(87) International publication number: WO 2011/024293

(57) **Abstract**

A detector and an entry control system includes: an identifying unit including a surface to which an identification target is moved close; a blower supplying airflow along the surface; a sampling port sucking the airflow from the blower; an analyzing unit analyzing a compound sucked by the sampling port; a database unit including an analysis data; a determining unit determining an analyzed result based on the data of the database unit; and a control unit performing control in accordance with a determined result of the determining unit.

## Description

### TECHNICAL FIELD OF THE INVENTION

The present invention relates to a detector for a hazardous object or others, and relates to an entry control system using the same.

### BACKGROUND ART

Globally, terrorism threats have been increased. Recently, a method of manufacturing explosive using an everyday item has been widely known, and therefore, terrorism and crime using the explosive have become a threat even in daily life. In London, the series of terrorist attacks targeting the subway and the bus occurred, which resulted in the large number of casualties. Also, according to the news report, even in Japan, such a case that the suspect who planned the suicide bombing in the commuter train was arrested occurred.

In order to prevent the terrorism and the crime before they occur, a technique of hazardous-object detection has been developed in various countries. For example, Patent Document 1 describes an explosive detector using a mass spectrometer. Vapor leaked from baggage is collected by a sampling probe, is ionized by using negative corona discharge, and is detected by using a mass spectrometer, so that the presence or absence of the hazardous object is determined.

Patent Document 2 describes a method of blowing compressed gas to baggage with a sample compound attached thereto, colleting the detached sample compound, and analyzing the sample compound by using a mass spectrometer.

Patent Document 3 describes a method of performing palm identification (authentication) and simultaneously sucking air near the hand by a suction pipe, and analyzing the air by using a mass spectrometer.

Patent Document 4 describes a method of collecting a hazardous object attached to a ticket, and analyzing the hazardous object by using a qualitative analyzer.

### PRIOR ART DOCUMENTS

### PATENT DOCUMENTS

Patent Document 1: Japanese Patent Application Laid-Open Publication No. 2000-28579
Patent Document 2: Japanese Patent Application Laid-Open Publication No. 2009-31316
Patent Document 3: Japanese Patent Application Laid-Open Publication No. 2002-70383
Patent Document 4: Japanese Patent Application Laid-Open Publication No. 2008-64618

### DISCLOSURE OF THE INVENTION

### PROBLEMS TO BE SOLVED BY THE INVENTION

The hazardous-object detectors described in Patent Documents 1 to 3 have been considered as mainly assuming operation in an important facility such as an airport, a factory, and an electric power plant, and as aiming at taking certain enough time to inspect the relatively small number of people. However, for the operation in a place such as a station where many people gather, a high-throughput hazardous-object detector is required. Here, in the methods of Patent Documents 1 to 3, it takes time to inspect each person since the detection is performed in a covered space (a closed space), and besides, burden of stress is imposed on the detected person. Therefore, it is considered that the operation in the place where many people use is not practical.

Further, in public transportation, a mode of a pass ticket for an automatic ticket gate has been currently shifted from a ticket to an IC card. As described in Patent Document 4, in a case that a hazardous-object detector is embedded inside the automatic ticket gate using the ticket, firstly, a specific ticket is required. Also, in order to detect the presence or absence of the hazardous object from the ticket, it is required to mechanically carry the ticket, and therefore, a carrier mechanism is complicated. Further, a step of detecting the hazardous object from the carried ticket, and besides, a step of ejecting the ticket are required, and therefore, it takes time for the process. Accordingly, it is considered that the achievement of the high-throughput hazardous-object detector is difficult. Still further, a ticket user may possibly feel uncomfortable since the user has to hold the ticket again after the detection.

### MEANS FOR SOLVING THE PROBLEMS

If a person handles even a small amount of an explosive and holds or touches a card, a ticket, or others with the person's hand, the compound of the explosive or others adhered on the person's hand is adhered on a surface of the card, the ticket, or others. The hazardous object or others is detected from the card, the ticket, or others, or from the hand, on which the compound of the explosive or others is adhered.

The present invention provides a detector for a hazardous object or others and in combination with an identification device in an open space. People pass through a gate or others in order to go into a target place such as a railway or an event space. At that time, any identification target such as a ticket is required. In the identification, the hazardous object or others is detected at high throughput, and therefore, the hazardous object or others is detected before they occur without imposing the burden of stress on people.

A detector includes: an identifying unit which has a surface to which an identification target is moved close; a blower supplying airflow along the surface; a sampling port sucking the airflow from the blower; an analyzing unit analyzing a compound sucked by the sampling port; a database unit containing ID information and an analysis data; a determining unit determining an identified result and an analyzed result based on the data of the database unit; and a control unit performing control in accordance with a determined result of the determining unit.

Also, an entry control system includes: an opening/closing gate; a surface to which a measurement target is moved close; a blower supplying airflow along the surface; a sampling port sucking the airflow from the blower; an analyzing unit analyzing a compound sucked by the sampling port; a database containing an analysis data; a determining unit determining an analyzed result based on the data of the database; and a control unit controlling the opening/closing gate in accordance with a determined result.

Further, a detector includes: a surface to which a measurement target is moved close; a blower supplying airflow along the surface; a sampling port sucking the airflow from the blower; a data getting unit getting a data of the measurement target; an analyzing unit analyzing a compound sucked by the sampling port; a database containing an analysis data; and a determining unit determining an analyzed result based on the data of the database.

The blower supplies the air along the surface to which the identification target or the measurement target is moved close. Here, by supplying the air parallely to the surface, occurrence of turbulent flow resulting in not sucking the compound to be collected is prevented. Also, in the blower, turbulent flow is prevented by supplying air in which laminar flow is dominant. In this manner, the detached compound from the identification target in an open space or the gas caused from the compound therefrom by the supplied air is carried by airflow, so that it can be collected. Also, depending on the presence or absence of the analysis target, an alarm can be issued, or opening/closing of the gate or others can be controlled.

### EFFECTS OF THE INVENTION

According to the present invention, a device which smoothly detects a hazardous object or others without imposing mental and temporal stress on a person can be provided since the detection of the hazardous object or others and identification thereof are simultaneously performed in an open space. Further, an operation in a place where many people gather can be achieved, so that the hazardous object or others can be detected with maintaining convenience in social life.

### BRIEF DESCRIPTIONS OF THE DRAWINGS

FIG. 1 is a diagram showing an example of an entire structure of a detector;
FIG. 2 is a flowchart showing an example of a system;
FIG. 3 is a diagram showing an example of an analyzing unit;
FIG. 4 is a diagram showing an example of arrangement of a blower and a sampling port, a moving direction of an identification target, and a wind direction;
FIG. 5 is a diagram showing an example of a method of generating and collecting a target compound from the identification target;
FIG. 6 is a diagram showing an example of a structure of the blower;
FIG. 7 is a diagram showing a state that an outlet of a hood of the blower is formed in a slit shape;
FIG. 8 is a diagram showing an example of a structure of the sampling port;
FIGs. 9A and 9B are diagrams each showing another example of the structure of the sampling port;
FIG. 10 is a diagram showing an example of a mass spectrum of triacetone triperoxide;
FIG. 11A is a top view showing a state of an experiment according to an embodiment;
FIG. 11B is a side view showing the state of the experiment according to the embodiment;
FIGs. 12A to 12D are diagrams each showing an example of variation in a mass spectrum of trichlorophenol depending on an arranged position of a sample;
FIGs. 13A and 13B are diagrams each showing an example of a mass spectrum varied with/without the blower;
FIGs. 14A and 14B are diagrams each showing an example of a mass spectrum varied with/without a cover of the sampling port;
FIG. 15 is a diagram showing a state that an angle can be adjusted in the blower;
FIG. 16 is a diagram showing an example of a state that the wind direction crosses the moving direction of the identification target at substantially right angles;
FIG. 17 is a diagram showing an example of a state that the wind direction crosses the moving direction of the identification target at a certain angle;
FIG. 18 is a diagram showing an example of a state that positions of the blower and the sampling port are offset with respect to an identifying unit;
FIG. 19 is a diagram showing an example of a state that a plurality of sampling ports are provided;
FIG. 20 is a diagram showing a state that an intake gas inlet of the sampling port is wider than a supply air outlet of the blower;
FIG. 21 is a diagram showing a state that an outlet of the hood of the blower is formed in an arc shape;
FIGs. 22A and 22B are diagrams each showing a state that an inlet of the sampling port is formed in an arc shape;
FIG. 23 is a diagram showing an example of a structure of the blower (showing a separation type);
FIG. 24A is a diagram showing an example in combination with an automatic ticket gate (showing near an identifying unit);
FIG. 24B is a diagram showing an example in combination with the automatic ticket gate (entirely showing);
FIG. 25A is a diagram of an example in combination with a biometric identification machine (showing near the identifying unit, horizontally placed);
FIG. 25B is a diagram of an example in combination with a biometric identification machine (entirely showing);
FIG. 25C is a diagram of an example in combination with a biometric identification machine (showing near the identifying unit, vertically placed);
FIG. 26 is a diagram showing an example in combination with an opening/closing gate;
FIG. 27 is a diagram showing an example in combination with a metal detector;
FIG. 28A is a diagram showing a state that a wind generation source of the blower is a blower;
FIG. 28B is a diagram showing a state that the wind generation source of the blower is a cross flow fan; and
FIG. 29 is a diagram of an example of a state that the sampling port is arranged right below the identifying unit, in combination with a biometric identification machine.

### BEST MODE FOR CARRYING OUT THE INVENTION

Hereinafter, descriptions are made in detail with reference to drawings. Note that, since device structures and contents of process operations which are described later are merely one example, other embodiments can be achieved by combination or replacement of embodiments with a publicly-known technique.

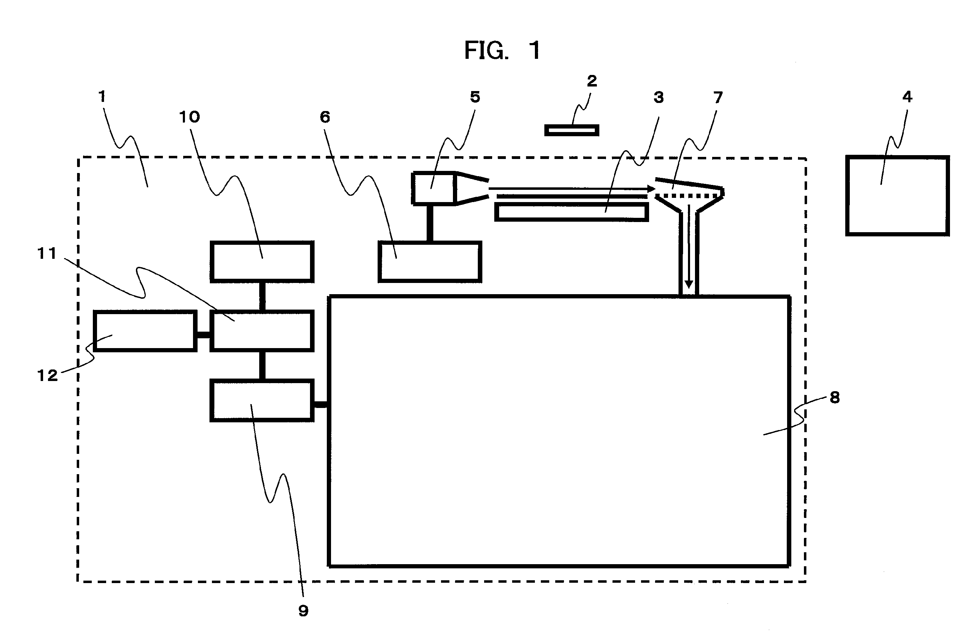

FIG. 1 is a diagram showing an example of an entire structure of a detector in the present invention. A detector 1 includes means for getting ID information, in which an identifying unit 3 including a surface for identifying an identification target 2 is provided. The identification target 2 is, for example, an IC card, a mobile phone, a ticket, a biological object, or others. A sensing area may be horizontally arranged or may be inclined. When the identification target 2 is identified, the ID information is sent to an identification database unit 4 which is externally provided, and the database and the ID information are compared with each other for determination. The ID information may be used for not only the comparison with the database but also registration of ID information with taking the biological object or others as the measurement target. Note that the identification database unit 4 may be provided inside the detector 1.

A blower 5 and a sampling port 7 are arranged so as to interpose the identifying unit 3 therebetween. From the blower 5, airflow is supplied to the sensing area. By supplying the airflow along the surface, the airflow hits the identification target 2 when the identification target 2 is moved close to the sensing area, so that sample gas obtained by gas and/or fine particles generated from the identification target 2 is caused, or the fine particles are detached therefrom. In order to detach the fine particles, the wind generated from the blower may be intermittent wind or sudden wind. Also, in this manner, the sample gas obtained by the gas and/or the fine particles generated from the identification target 2 is carried to the sampling port 7. This airflow prevents not to perform the intake and the detection of the gas or the fine particles due to turbulent flow. Therefore, it is desired to parallely supply the air to the sensing area. This is because airflow not hitting the sensing area is desired for preventing the turbulent flow. Also, the blower 5 generates flow in which laminar flow is dominant. An air supply control unit 6 for controlling the blower 5 is provided. The air supply control unit 6 controls a flow rate, a flow velocity, temperature, driving of the blower 5, or others. As a method of driving the blower 5, the air may be always supplied, or the driving may be performed in synchronization with the identification or performed when, for example, a sensor responds to the person.

The sampling port 7 for performing the intake of the sample gas obtained by the carried gas and/or the fine particles is provided. It is desired that the sampling port 7 is arranged so as to be in substantially parallel to the sensing area. For the substantially parallel arrangement, the intake gas inlet may be formed by using the supply air outlet of the blower 5 or others. As an example of the substantially parallel arrangement, it can be arranged at 0 to 45 degrees with respect to the sensing area. Also, the sampling port 7 may be arranged below the identifying unit 3. An intake volume of the sampling port 7 may be controlled.

The control unit may control a flow rate from the blower and/or a flow-rate ratio between the blower and the sampling port.

It is desired that the blower 5 and the sampling port 7 are arranged so as to interpose the sensing area. And, it is preferred that the supply air outlet and the intake gas inlet are arranged so as to face in a parallel direction of the surface. Also, the intake gas inlet may open so as to contain a vertical direction of the surface. Further, the sampling port may be arranged so as to interpose the surface between the sampling port and the identification target or the measurement target. This can achieve space saving and others.

The sample gas obtained by the gas and/or the fine particles sucked from the sampling port 7 is analyzed by an analyzing unit 8. The present embodiment describes an example of using a wire-type linear ion trap mass spectrometer as the analyzing unit 8. However, any other various spectrometers may be used, such as a quadrupole ion trap mass spectrometer, a quadrupole filter mass spectrometer, a triple quadrupole mass spectrometer, a time-of-flight mass spectrometer, a magnetic sector type mass spectrometer, and an ion mobility spectrometer.

When the mass spectrometer is used, a signal measured by the analyzing unit 8 is gotten as a mass spectrum by an analysis control unit 9. In this case, an analysis database unit 10 has stored a database containing a standard mass spectrometric data (which is a value of m/z (ion mass number/ionic valence) and relative intensity) required for identifying a compound to be specified as an analysis target, for example, a compound such as a homemade explosive. The mass spectrum measured by the analyzing unit 8 is sent to a determining unit 11 to perform a data processing such that the database of the homemade explosive or others which is read from the analysis database unit 10 is compared with a result of mass spectrometry of ions derived from a component of the homemade explosive so that the homemade explosive compound is specified. Depending on presence or absence of the specified homemade explosive compound and/or the analyzed result thereof, the control in accordance with the analyzed result is performed such that an alarm unit 12 issues an alarm.

As described above, the blower 5 and the sampling port 7 are arranged so as to interpose the identifying unit 3 therebetween, the air is supplied onto the sensing area, and the compound attached to the identification target 2 is carried to the sampling port 7, so that the identification can be performed even in the open space. And, by detecting the hazardous object or others in synchronization with the identification, the detection can be performed individually for each person. Also, since the detection is performed simultaneously with the identifying operation in the open space, the detection can be easily performed with less mental and temporal stress on the user.

Further, a combination data of the ID information and the analysis data can be stored in the database as a detection history. By using the individual ID information, an individual analyzed result can be identified from an ID number or others assigned to the identification target 2, so that the detection history is easily managed.

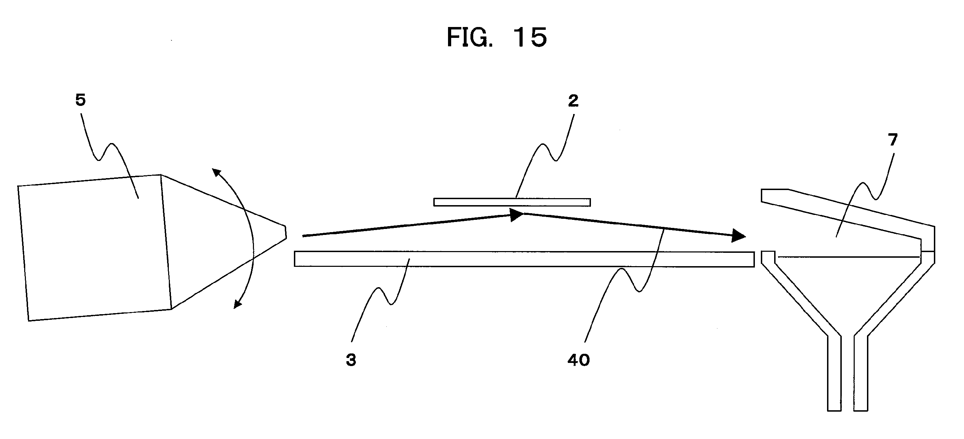

As shown in FIG. 15, it is desired that the angle is adjusted in the blower 5 to supply the air at an angle so as not to hit the sensing area. Also, when the identification target 2 is moved close to or is held over the sensing area, even if it is held away from the sensing area to some extent, the air can be supplied onto the identification target 2 to generate the sample gas obtained by the gas and/or the fine particles from the identification target 2, or detach the fine particles therefrom. Also, by using the supplied air reflected from the identification target 2, the sample gas obtained by the gas and/or the fine particles can be carried to the sampling port 7.

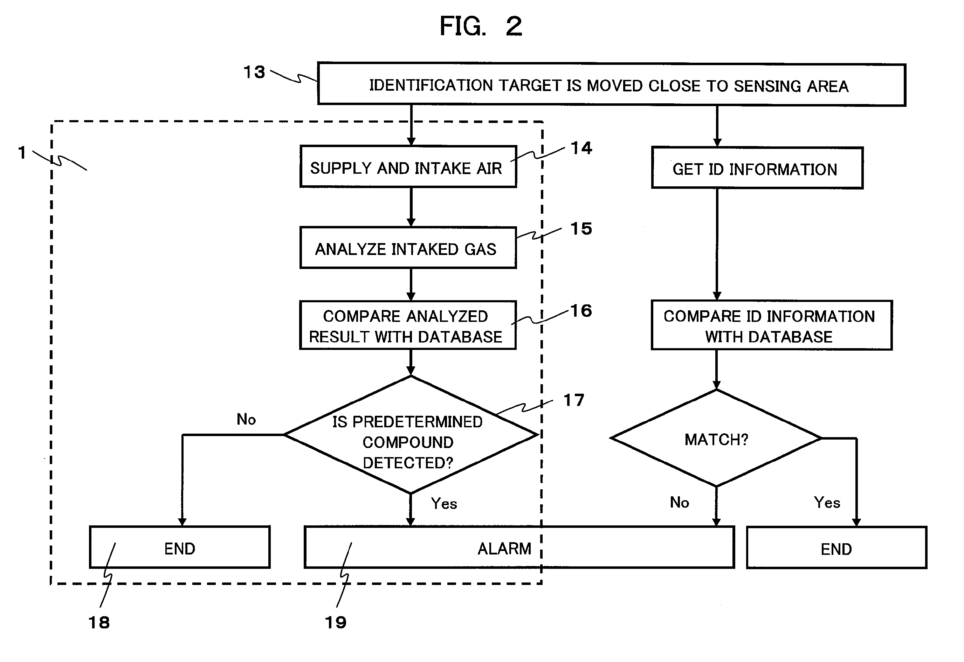

FIG. 2 is a flowchart showing an example of a system in the present invention. First, the identification target is moved close to or is held over the sensing area (step 13). Simultaneously with or after the identification, the sample gas obtained by the gas and/or the fine particles is generated from the identification target by the airflow generated from the supplied air over the sensing area, and the sample gas obtained by the generated gas and/or fine particles is sucked by the sampling port (step 14) . The intake sample gas obtained by the gas and/or the fine particles is analyzed by the analyzing unit (step 15). The analyzed result is compared with the database in the analysis database unit (step 16). The presence or absence of the predetermined compound is determined by the determining unit (step 17). When the absence of the predetermined compound is determined, the process ends (step 18) . When the presence of the predetermined compound is determined, the alarm is outputted (step 19). A method of the alarm may be to generate sound or light, or contact a security staff. Also, it may be to control to close the opening/closing gate or others.

When the identification target or the measurement target is moved close to the surface so as to enter an area where the data can be gotten (step 13), the ID information of the identification target (such as an IC card, a ticket, or a biological object) is gotten and is compared with the database previously registered for the determination. When they match each other, the process ends. When they do not match each other, the alarm is outputted. The ID information may be registered in the database. Further, even when ID information such as a fingerprint, veins, or others is gotten and is registered in the identification database, the hazardous object or others may be detected by using the detector. In this case, the process goes up to the registration of the ID information, and therefore, the comparison with the identification database and the determination may be performed as required.

In the present embodiment, the wire-type linear ion trap mass spectrometer is used as the analyzing unit. Also with this, the processing time of the detector can be about one second.

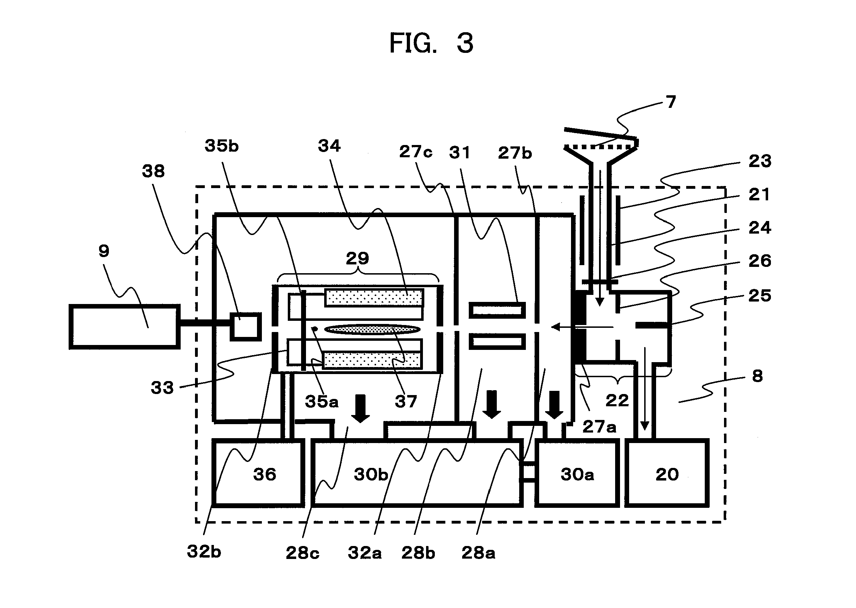

FIG. 3 is a diagram showing an example of the analyzing unit in the present invention. The gas or others sucked by the sampling port 7 is sent to the analyzing unit 8. The gas or others is introduced to an ion source 22 via a suction pump 20 and a sample introduction pipe 21. The suction is performed with a suction flow rate of the suction pump 20 of, for example, 6.0 L/min. The sample introduction pipe 21 is heated by a pipe heater 23, so that absorption of the gas and the fine particles inside the pipe is prevented. Also, when the explosive component is detected or when the sampling port 7 or the sample introduction pipe 21 gets dirty, heat cleaning can be performed so that a next inspection can be performed early. The pipe heater 25 can be heated up to a temperature of 300°C at maximum. However, in the case of the homemade explosive, thermal decomposition occurs due to the heating, and therefore, it is desired to use the heater in a range between 70°C and 120°C. A fine-mesh filter 24 is provided in the sample introduction pipe 21, so that the fine particles are attached to this fine-mesh filter 24. Since the fine-mesh filter 24 is heated by the pipe heater 23, the attached fine particles are gasified to become the sample gas. As the fine-mesh filter 24, a stainless steel fiber (wire) filter or a sintered filter of, for example, 50 µmm, is used. This fine-mesh filter 24 can be cleaned for reuse or be replaced with a new product. Also, the fine-mesh filter 24 may be individually heated to gasify the fine particles.

Here, as the ion source 22, usage of an atmospheric pressure chemical ionization source with using negative corona discharge or positive corona discharge is exemplified. The method of generating ions may be other methods with using a radiation source, electrons, light, laser, Penning discharge, electrospray, or others. The atmospheric pressure chemical ionization source generates primary ions with using corona discharge under an atmosphere, and ionizes the sample gas with using a chemical reaction between these primary ions and the sample gas. In the ion source 22, a needle electrode 25 is arranged, and a high voltage is applied between the needle electrode and an extraction electrode 26 to generate the corona discharge near a tip of the needle electrode 25. For example, a voltage of 5 kV is applied for the positive ionization, and a voltage of -4 kV is applied for the negative ionization. By this corona discharge, nitrogen, oxygen, water vapor, and others in air are ionized to become the primary ions. The generated primary ions are moved to a first pore electrode 27a side by an electric field. The sample gas sucked via the pipe passes through an opening portion of the extraction electrode 26, and flow into the needle electrode 25 side. At this time, the sample gas is reacted with the primary ions, so that it is ionized.

The ions of the ionized sample gas are introduced to an ion trap unit 29 of a high vacuum unit 28c via the first pore electrode 27a, a first differential evacuation unit 28a, a second pore electrode 27b, a second differential evacuation unit 28b, and a third pore electrode 27c. In order to introduce the ions from an atmospheric area to a vacuum area, the differential evacuation is performed. For the differential evacuation, a vacuum pump 30a and a vacuum pump 30b (one of which can perform vacuum evacuation for two places) are used. The vacuum pump 30a is used also as a roughing pump of the vacuum pump 30b. As the method of the differential evacuation, other methods such as a method of individually using a vacuum pump may be used. As a hole diameter of each pore, for example, the first pore electrode 27a has an internal diameter of 0.12 mm and a length of 10 mm, the second pore electrode 27b has an internal diameter of 0.5 mm, and the third pore electrode 27c has an internal diameter of 1.2 mm. The hole diameter of each pore is changed depending on an evacuation volume of the vacuum pump. In the second differential evacuation unit 28b, an ion guide 31 is installed. In place of this ion guide 31, an ion lens or others may be used. Also, the ion guide 31, the ion lens, or others may be installed in the first differential evacuation unit 28a, the second differential evacuation unit 28b, and the high vacuum unit 28c. In order to prevent adhesion of contamination or others inside the ion source 22, the first pore electrode 27a, and the second pore electrode 27b, it is desired to heat them.

An example of the ion trap unit 27 is described as a wire-type linear ion trap including: an inlet end electrode 32a; an outlet end electrode 32b; an excitation electrode 34 inserted in a gap of a quadrupole rod electrode 33; a trap wire electrode 35a; and an extraction wire electrode 35b. From a buffer gas supply source 36 to the ion trap unit 29, a buffer gas required for ion trapping and ionic dissociation is supplied. While helium gas is used in the present invention, air, argon, nitrogen, or others may be used. The ions introduced to the ion trap unit 29 are trapped in a trap area 37 shown in the drawing by an electrostatic potential between the inlet end electrode 32a and the trap wire electrode 35a in an axial direction and a quadrupole potential generated by the quadrupole rod electrode 33 in a diameter direction. By applying an alternate voltage to the excitation electrode 34 inserted in the gap of the quadrupole rod electrode 33, only predetermined ions having m/z are resonantly excited in a direction of the excitation electrode 34, and are emitted in the axial direction by an extraction electric field formed by the extraction wire electrode 35b. These predetermined ions having m/z are detected by a detecting device 38. By controlling the resonance conditions and the voltage of each electrode by the analysis control unit 9, the ions having any m/z are emitted, so that a mass spectrum is obtained.

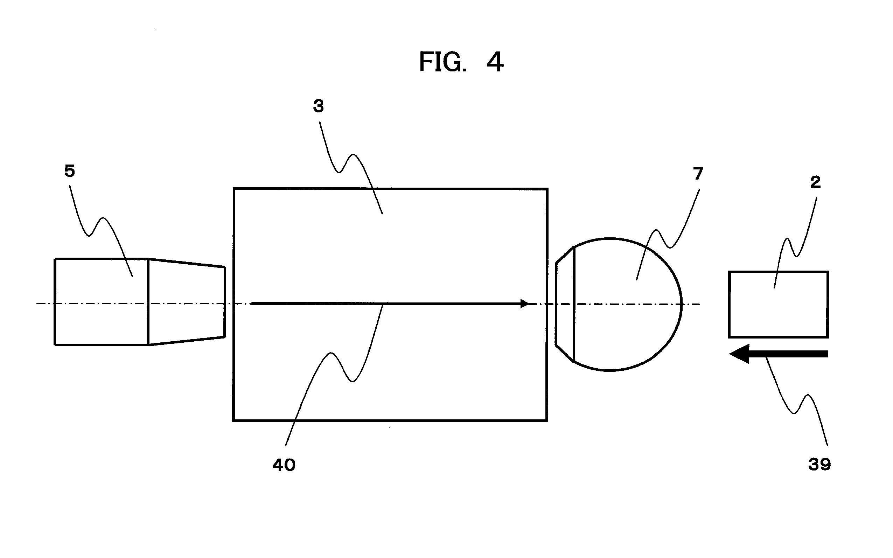

FIG. 4 is a top view showing an example of the arrangement of the blower and the sampling port, the moving direction of the identification target, and the wind direction. The supply air outlet of the blower 5 and the intake gas inlet of the sampling port 7 are positioned to face the identifying unit 3. Here, a center of the supply air outlet of the blower 5 and a center of the intake gas inlet of the sampling port may be aligned with a center position of the sensing area. This is because the air can easily hit the identification target 2 since the identification target 2 is often held over the center of the identifying unit 3. Also, in the present embodiment, a wind direction 42 is an opposite direction of a moving direction 41 of the identification target. However, the blower and the sampling port may be arranged so that the wind direction 42 is a forward direction of the moving direction 41 of the identification target.

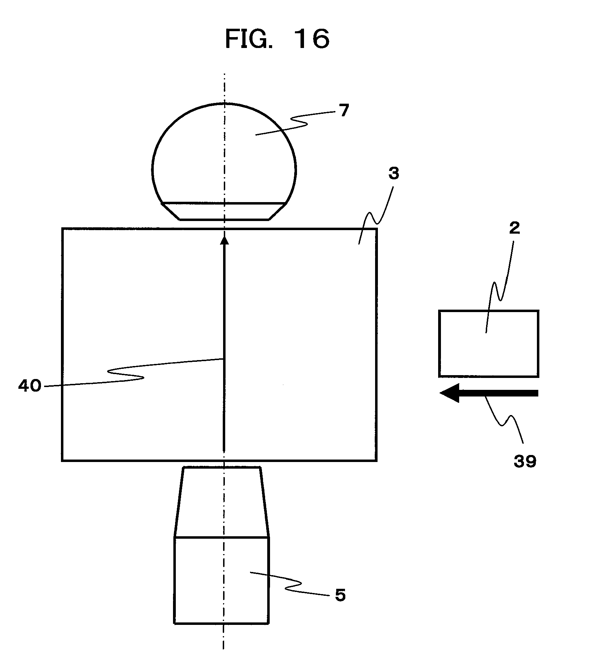

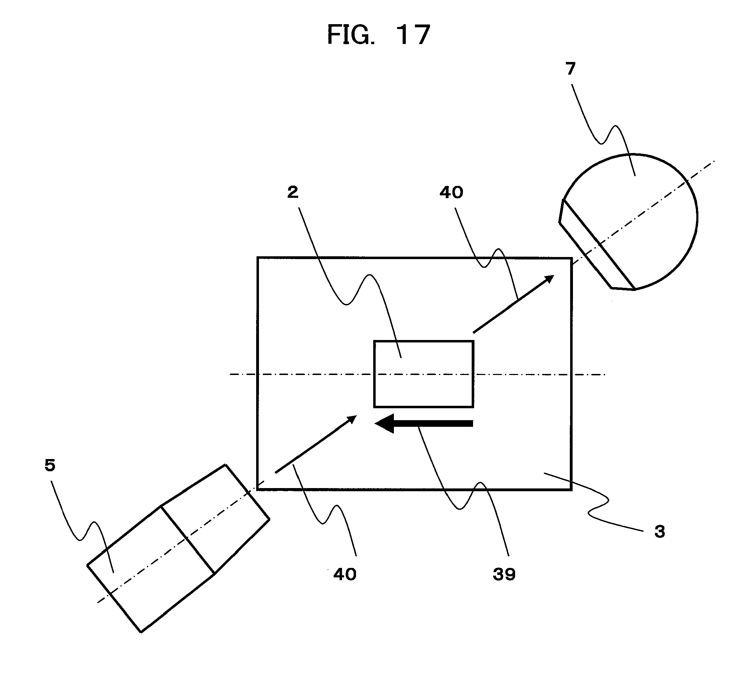

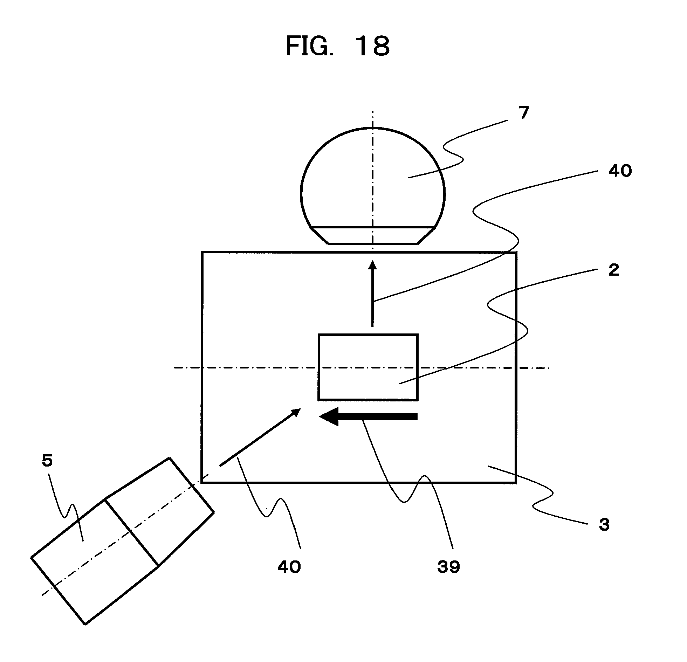

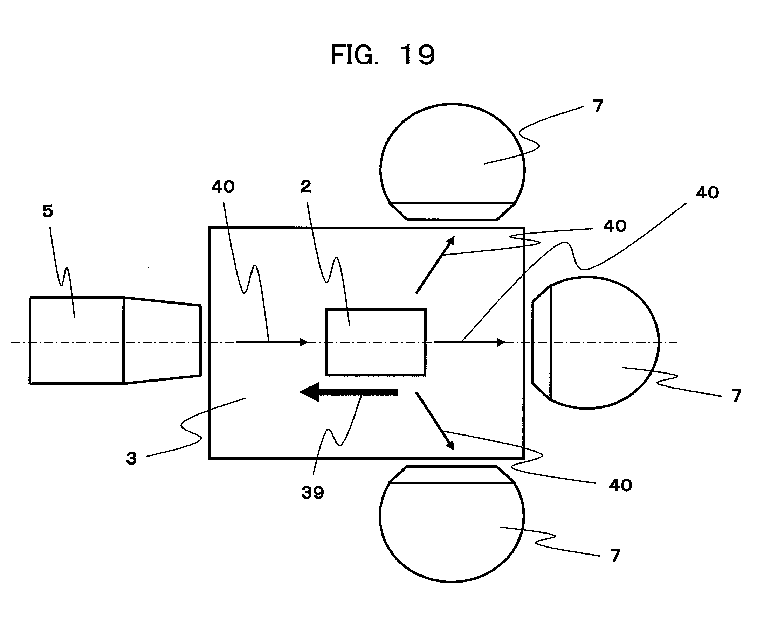

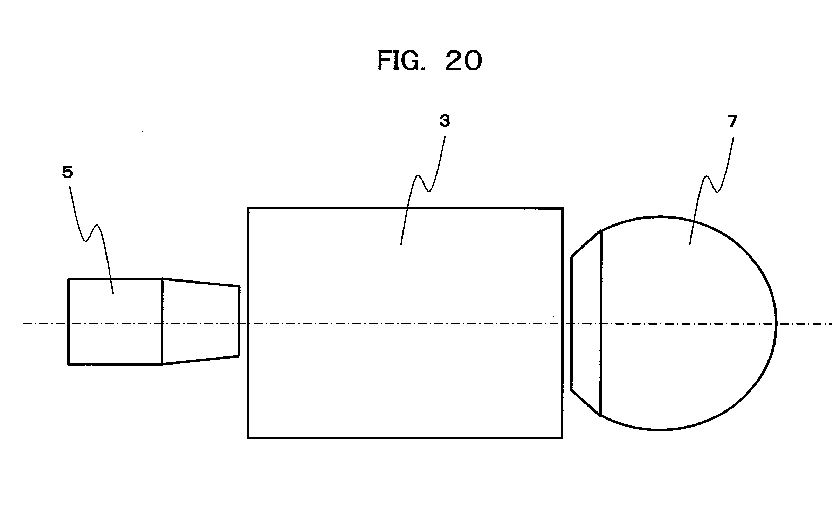

An example shown in FIG. 16 is that the wind direction 40 is substantially orthogonal to the moving direction 39 of the identification target. FIG. 17 shows an example that the wind direction 40 crosses the moving direction 39 of the identification target at a certain angle. Further, as shown in FIG. 18, depending on the moving direction 39 of the identification target, the positional relation between the blower 5 and the sampling port 7 may be offset with respect to the identifying unit 3. FIG. 19 shows a case that a plurality of sampling ports 7 are provided. The airflow from the blower 5 tends to spread wider as closer to the sensing area. In this manner, a gas intake direction may be changed for the arrangement of the plurality of sampling ports 7. With using a structure in which the plurality of these sampling ports 7 are combined, they may be formed so that their intake gas inlets surround the identifying unit 3. FIG. 20 shows an example case that the intake gas inlet of the sampling port 7 is wider than the supply air outlet of the blower 5.

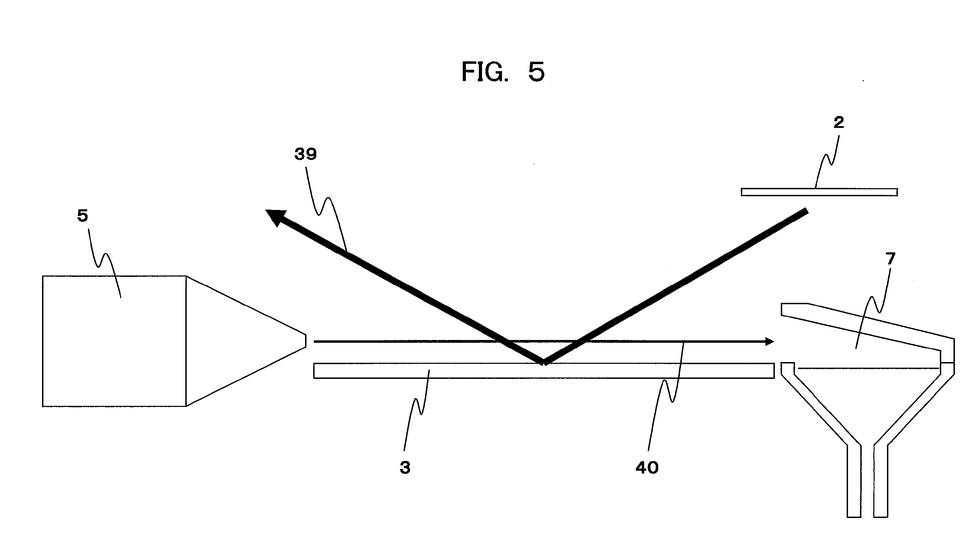

FIG. 5 is a diagram showing an example of a method of generating and collecting the target compound from the identification target.

The air supplied from the blower 5 hit the identification target 2, and the target compound attached to the identification target 2 is detached or the gas is generated. The generated target compound is carried by the supplied air to be collected by the sampling port 7. In the present embodiment, the identification target 2 is obliquely moved. However, the same result can be obtained even if it is moved in an orthogonal direction.

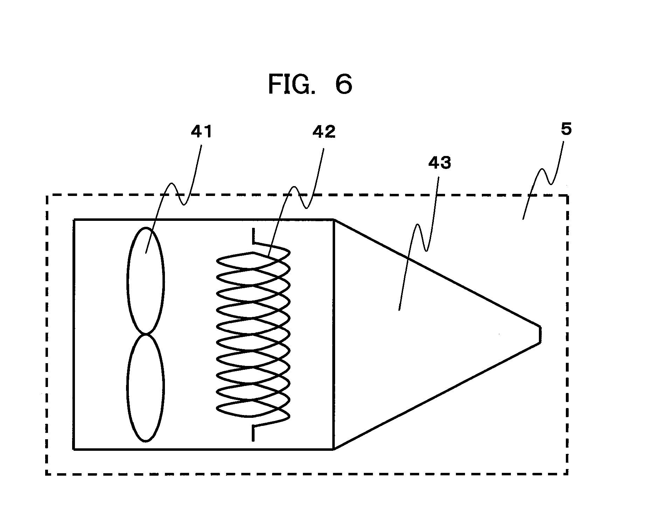

FIG. 6 is a diagram showing an example of the structure of the blower. The blower 4 includes: a wind generation source 41 (such as a propeller fan) for generating wind; a heat generation source 42 (such as a heater) for generating heat; and a hood 43 for providing directionality of the wind. By providing the wind generation source 41 and the hood 42, the air in which the laminar flow is dominant can be supplied. By using a slit shape or an arc shape as a shape of the supply air outlet, the laminar wind can be supplied to the sensing area. Also, by providing the heat generation source 41, the generation of the target compound attached to the identification target can be increased. For example, even in winter at a low temperature or in a case that the generation of the gas is weaken in cold climates, the detection can be performed with higher accuracy.

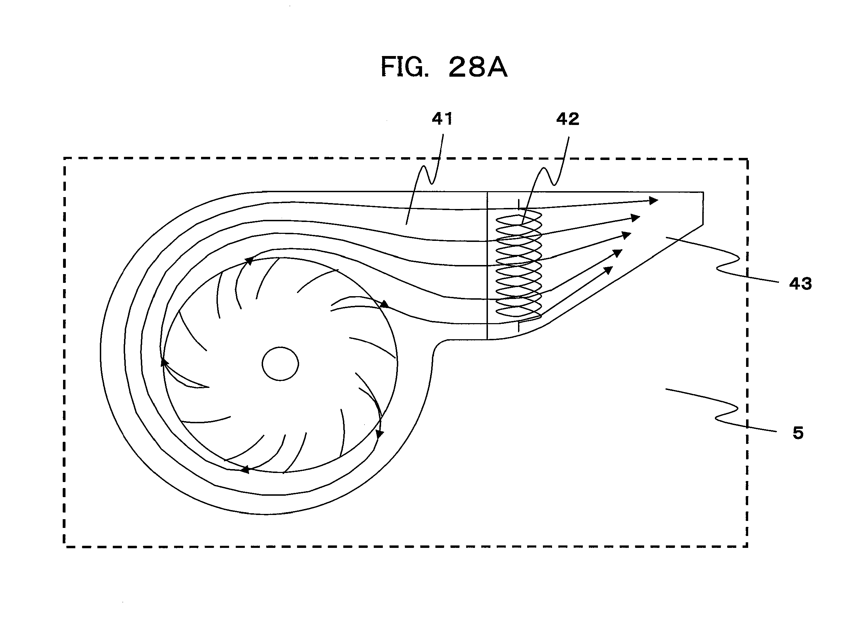

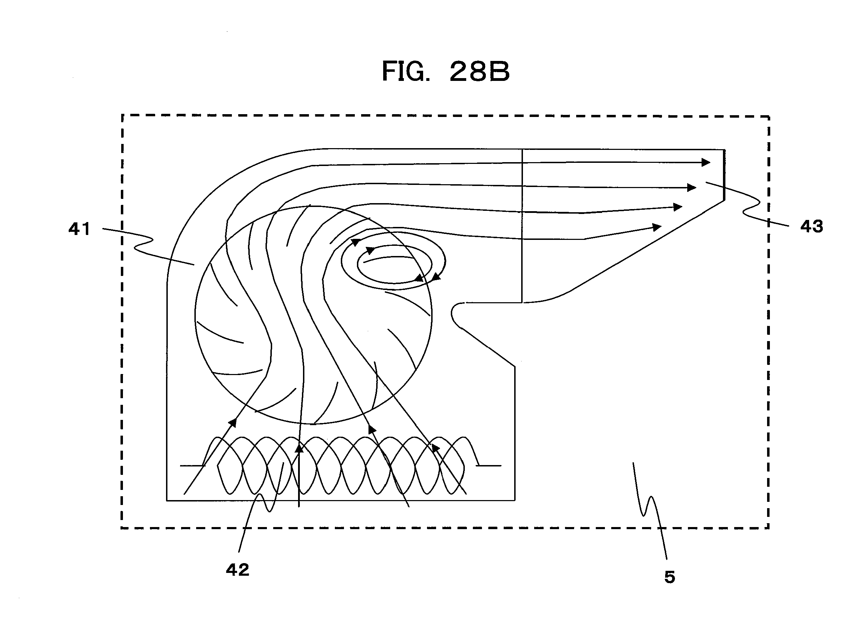

The wind generation source may be a blower as shown in FIG. 28A. By using the blower, the flow can be rectified in one direction, so that wind with high static pressure can be supplied. Also, as shown in FIG. 28B, it may be a cross flow fan. Since the wind is emitted in a lateral direction along a circumference of a runner, the uniformed wind can be obtained. By lengthen a cylindrical runner, a width of the wind can be increased. The heat generation source 42 may be arranged in front of a suction port or in back of an emission port.

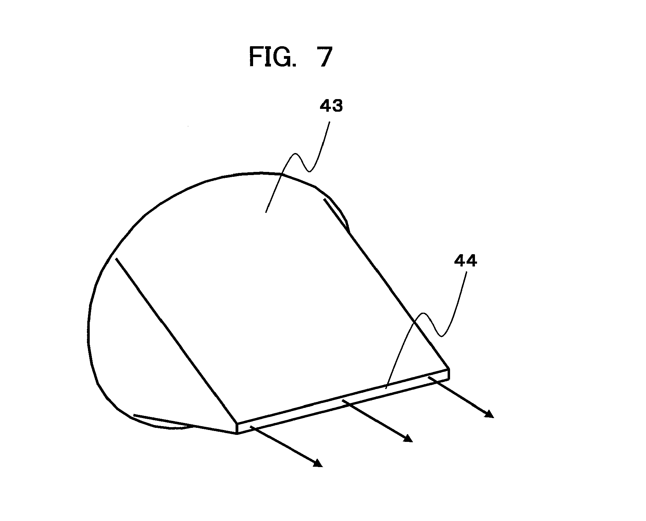

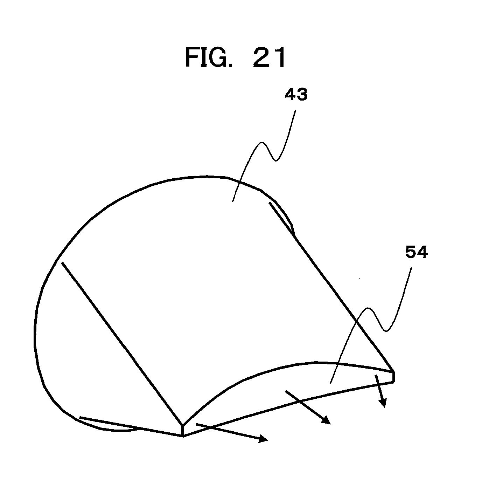

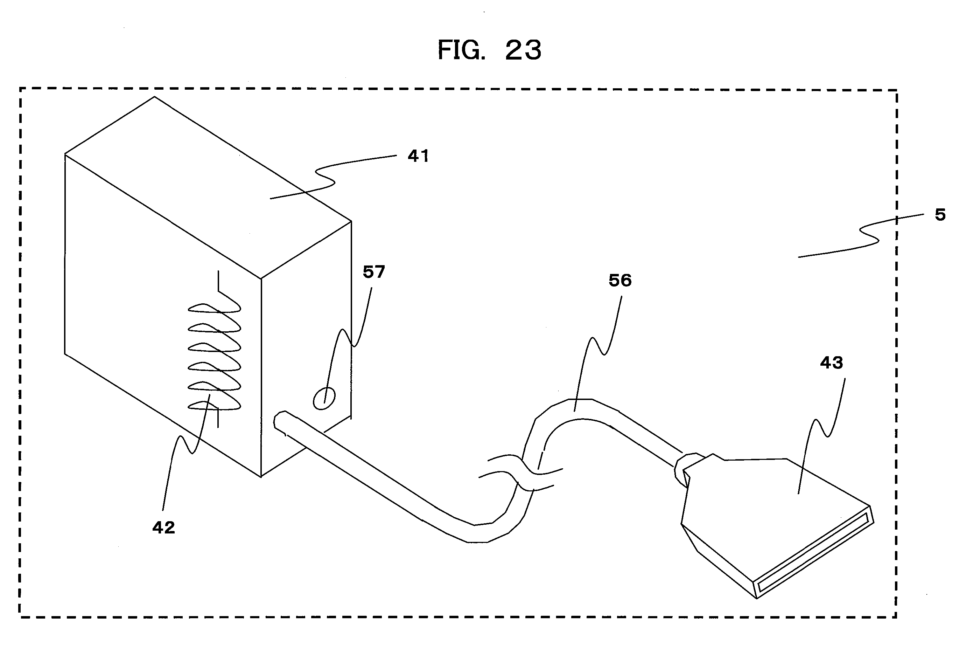

FIG. 7 is a diagram showing a state that an outlet of the hood of the blower is formed in a slit shape. The outlet of the hood 43 shown in FIG. 7 is formed in a slit shape 44, so that the laminar airflow having the directionality can be supplied. Also, as shown in FIG. 21, the outlet of the hood 43 may be formed in an arc shape 54. In this case, the gas or others can be efficiently carried as collecting the air, which tends to spread along the identifying unit, onto a center of the identifying unit. Also, as shown in FIG. 23, as the blower, a structure in which the hood 43 and the wind generation source 41 or others are separated from each other can be used. The air supplied from the wind generation source 41 may be delivered to the supply air outlet through a tube 56. With taking such a structure that the heat generation source 42 is embedded inside the wind generation source 41, the plurality of supply air outlets are connected to the wind generation source 41 and others through the tube 56 by using a plurality of ports 57, so that maintenance can be lightened, conditions or others in a plurality of detectors or entry control systems can be unified.

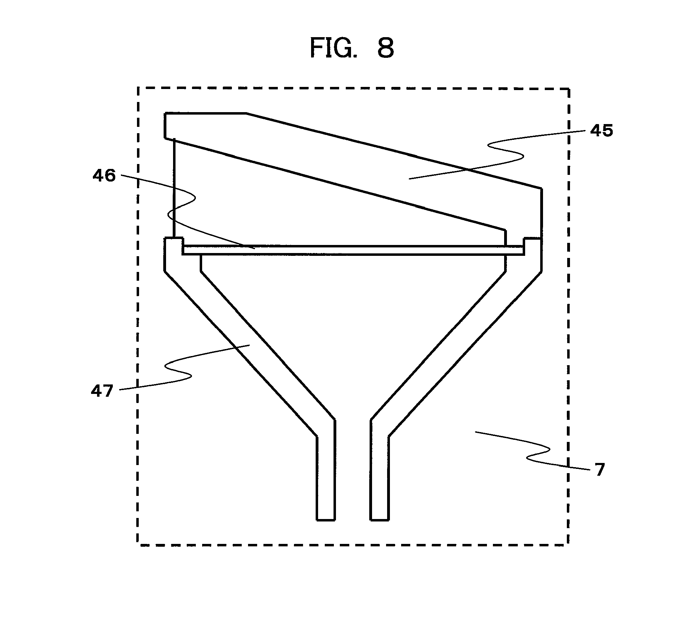

FIG. 8 is a diagram showing an example of the structure of the sampling port. The sampling port 7 includes: a cover 45 for preventing intake of unnecessary air (air not carried from the blower); a rough-mesh filter 46 (such as metallic mesh) for preventing contamination of a foreign substance such as dust; and a guide 47 for feeding the air containing the sample gas obtained by the gas and/or the fine particles generated from the identification target to the analyzing unit. Similarly to the fine-mesh filter provided in the analyzing unit, the mesh filter can be cleaned for reuse or be replaced with a new product when it gets stuck by the dust. Also, entering of a finger or the identification target into the sampling port 7 is prevented. Further, it is desired to form an inside of the cover in a taper shape. This is because the air containing the sample gas obtained by the gas and/or the fine particles is easily supplied to the guide 47 by the taper shape. Still further, if the inside of the cover is formed in a flat shape, there is a possibility that turbulent flow occurs inside.

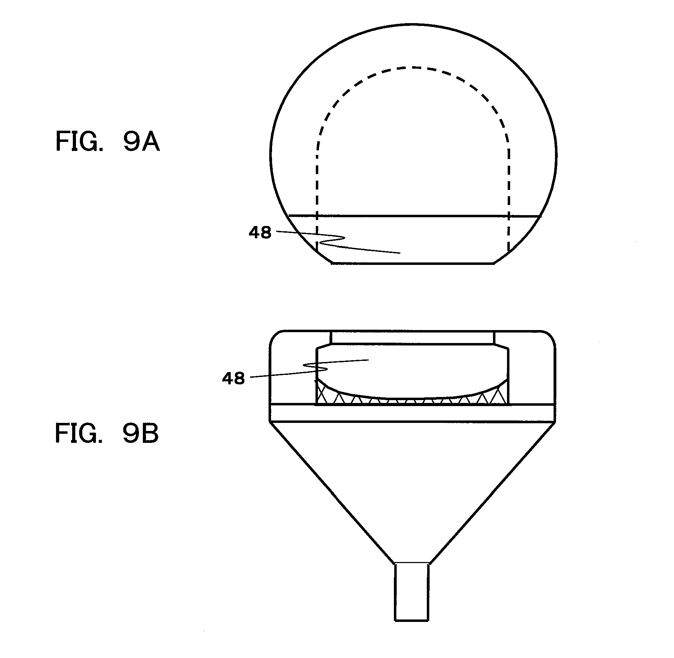

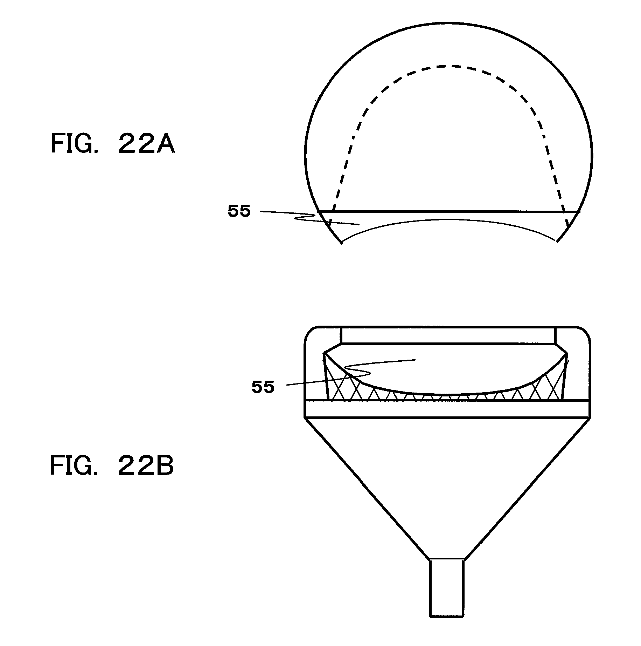

The intake gas inlet may be formed in a slit shape 48 as shown in FIGs. 9A and 9B. However, it may be formed in an arc shape 55 as shown in FIGs. 22A and 22B so that the air (containing the sample gas obtained by the gas and/or the fine particles) supplied from the blower can be more sucked. FIG. 22A shows a top view of the sampling port, and FIG. 22B shows a front view of the sampling port.

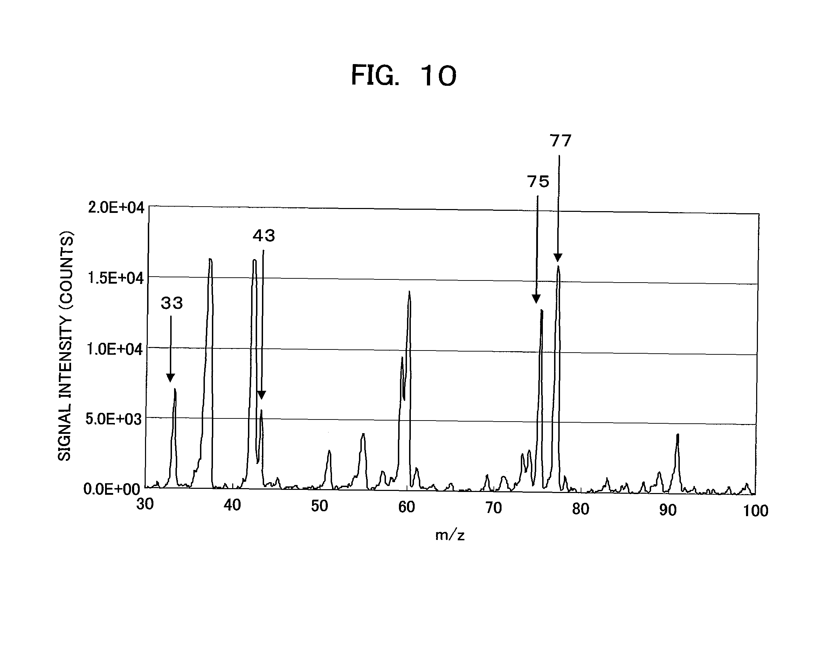

Next, in the embodiment of the present invention, an example of detecting the explosive as the hazardous object is described. While the explosive is detected as the hazardous object in the present embodiment, the detection can be performed for any compound as long as the compound can be detected by the analyzing unit, such as a flammable compound such as gasoline, an abnormal-odor compound, a chemical agent, and an illicit drug. In the present embodiment, as a sample, triacetone triperoxide which is the component of the homemade explosive is used. FIG. 10 is a diagram showing an example of a mass spectrum of triacetone triperoxide obtained in the embodiment of the present invention. Fine particles of triacetone triperoxide of several µg have been attached to the sample (container), and the sample has been placed for experiment at a portion which is assumed as the identifying unit. With using the positive ion detection, a pipe temperature for the sample introduction has been 70°C, and the ion source and the first pore electrode have been heated at 120°C. Signals having m/z=33, 43, 75, and 77 have been detected. A molecular weight "M" of triacetone triperoxide is 222. The ratio of m/z=75 is assumed to be "(M/3+H)⁺". The other ratios of m/z=33, 43, and 77 indicate signals of decomposing materials of triacetone triperoxide. That is, it is assumed that triacetone triperoxide is detected when at least one or more of the signals having m/z=33, 43, 75, and 77 is detected. Also, if it is assumed that triacetone triperoxide is detected when a plurality of peaks of m/z=33, 43, 75, and 77 are detected, there is an advantage that the number of error reports from the analyzing unit is decreased. For example, when the detection is determined only with the peak of m/z=77, if other component is accidentally detected as the peak of m/z=77, the error report is adversely provided. Therefore, it is better assumed that triacetone triperoxide is detected when any one or more of m/z=33, 43, and 77 which are other peaks are simultaneously detected therewith.

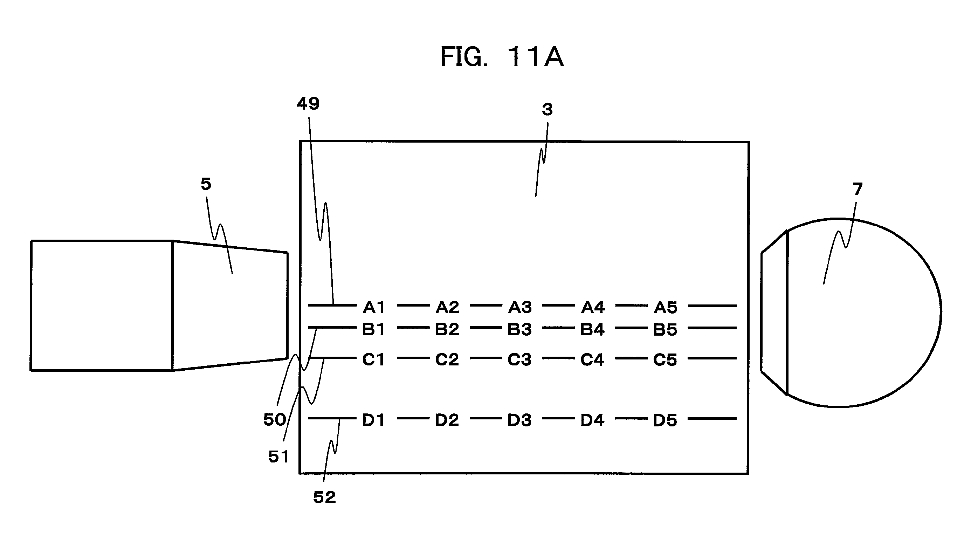

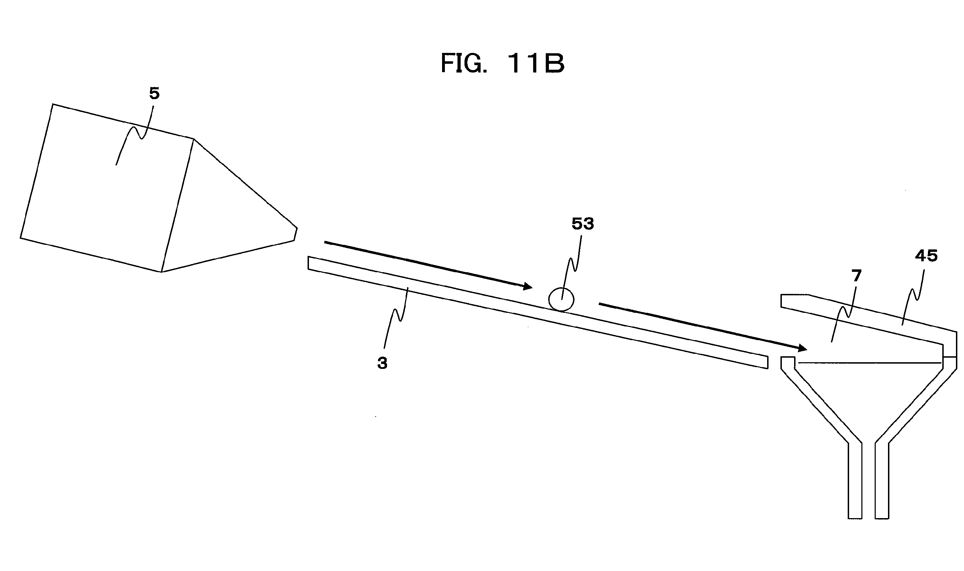

In the case that the sample is placed on the identifying unit in the embodiment of the present invention, variation in the intensity has been measured. FIG. 11A is a top view showing an example of a state of the experiment, and FIG. 11B is a side view showing the example of the state of the experiment. For the sample, trichlorophenol (hereinafter, referred to as TCP) which is a standard sample has been used as a simulated compound of the hazardous object. The experiment has been performed such that several µg of TCP are attached to a sample 53, and the sample 53 is held over the sensing area of the identifying unit 3.

The experiment has been performed with the cover 45 of the sampling port 7 and with the air supply from the blower 5 for the gas intake and the analysis to examine how the mass spectrum is varied depending on the position of the sample 53. The air has been parallely supplied to the sensing area, the flow velocity of the air supply has been 4 m/s, the temperature of the air supply has been 30°C, the flow rate of the intake gas has been 6 L/min, and the wire-type linear ion trap mass spectrometer has been used as the analyzing unit. As the sample position, it has been arranged at a total of 25 points which are each five points in an A row 49, a B row 50, a C row 51, and a D row 52 shown in FIG. 11A.

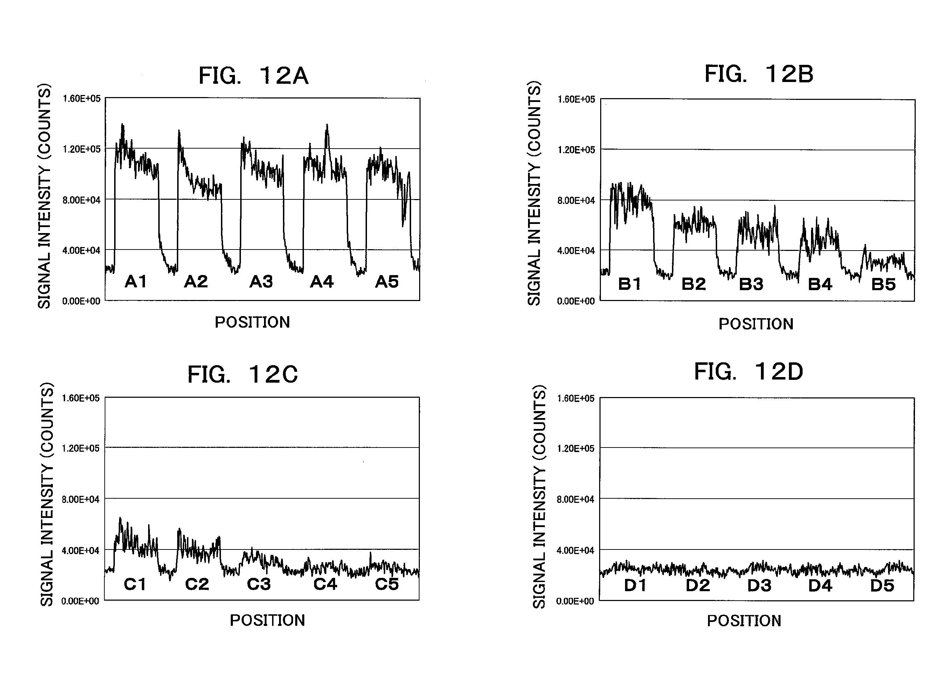

FIGs . 12A to 12D are diagrams each showing an example of the variation in the mass spectral peak intensity of TCP depending on the arrangement place of the sample obtained from the embodiment of the present invention. The variation in the mass spectral peak intensity of m/z=195 to 197 are measured. FIG. 12A shows the variation in the mass spectral peak intensity in the A row 49, FIG. 12B shows the variation in the mass spectral peak intensity in the B row 50, FIG. 12C shows the variation in the mass spectral peak intensity in the C row 51, and FIG. 12D shows the variation in the mass spectral peak intensity in the D row 52. From each experiment result in FIGs. 12A to 12D, it is found that the mass spectral peak intensity is high at the centers of the blower and the sampling port which have the large air supply volume and, more particularly, at a portion near the blower. And, it is found that the mass spectral peak intensity is low at portions away from the centers of the blower and the sampling port which have the small air supply volume and, more particularly, at a portion away from the supply air outlet. When the identification target is held over the identifying unit, it is often over the center of the identifying unit. Therefore, depending on the positions of the blower and the sampling port, measurement with a higher intensity can be achieved.

In the embodiment of the present invention, the variation in the mass spectral peak intensity with/without the blower are measured. As shown in FIG. 11B, the experiment has been performed such that several µg of TCP are attached to the sample 53, and the sample 53 is held over the sensing area of the identifying unit 3.

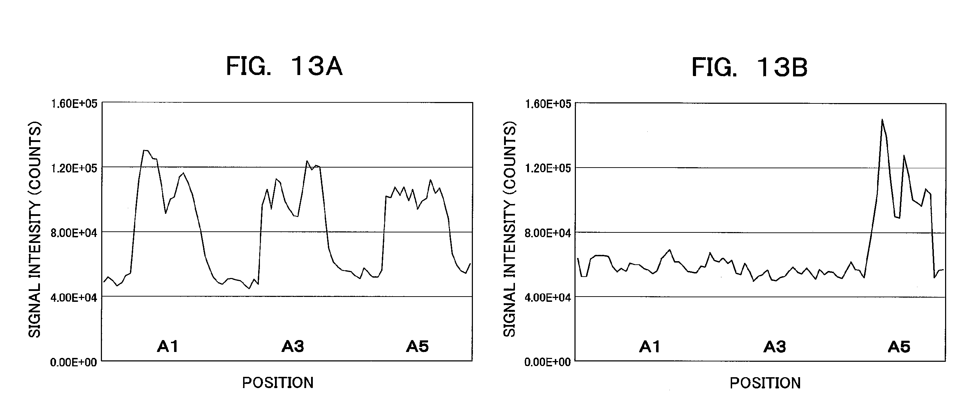

The experiment has been performed with the cover 45 of the sampling port 7 and with/without the air supply from the blower 5 for the gas intake and the analysis to examine how the mass spectral peak intensity is varied with/without the air supply from the blower 4. As the sample position, it has been arranged at three points of A1, A3, and A5, in the A row 49 shown in FIG. 11A. FIGs. 13A and 13B are diagrams each showing an example of the variation in the mass spectral peak intensity with/without the blower obtained from the embodiment of the present invention. In the case with the blower, the air has been parallely supplied, the flow velocity of the air supply has been 4 m/s, and the temperature of the air supply has been 30°C. The flow rate of the gas intake has been 6 L/min, and the wire-type linear ion trap mass spectrometer has been used as the analyzing unit. FIG. 13A shows the variation in the mass spectral peak intensity in the A row 49 in the case with the blower, and t FIG. 13B shows the variation in the mass spectral peak intensity in the A row 49 in the case without the blower.

From each experiment result in FIGs . 13A and 13B, in the case without the blower, it is considered that the hazardous object can be collected only near the sampling port, and therefore, the detection in the open space is difficult. Therefore, by supplying the air, an area for the hazardous-object collection can be enlarged, so that a collection efficiency can be improved. Also, since the hazardous object can be collected in the open space and the flow rate of the intake gas required for the analysis can be decreased, the suction pump or others can be downsized.

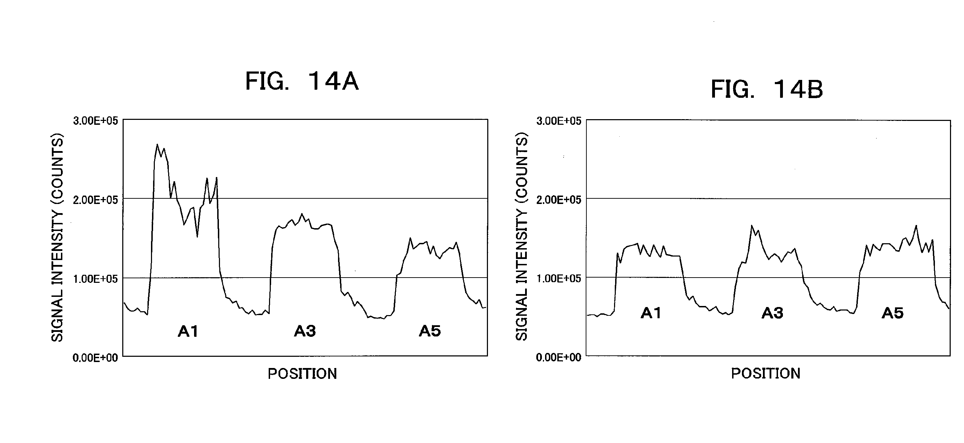

Further, an effect of the cover of the sampling port has been measured. As shown in FIG. 11B, the experiment has been performed such that several µg of TCP are attached to the sample 53, and the sample 53 is held over the sensing area of the identifying unit 3. The experiment has been performed with the air supply from the blower 5 and with/without the cover 45 of the sampling port 7 for the gas intake and the analysis to examine how the mass spectrum is varied with/without the cover 45 of the sampling port 7. As the sample position, it has arranged at three points of A1, A3, and A5, in the A row 49 shown in FIG. 11A. FIGs. 14A and 14B are diagrams each showing an example of the variation in the mass spectral peak intensity with/without the cover of the sampling port obtained from the embodiment of the present invention. The air has been parallely supplied, the flow velocity of the air supply has been 4 m/s, and the temperature of the air supply has been 30°C. The flow rate of the gas intake has been 6 L/min, and the wire-type linear ion trap mass spectrometer has been used as the analyzing unit. FIG. 14A shows the variation in the mass spectral peak intensity in the A row 49 in the case with the cover of the sampling port, and FIG. 14B shows the variation in the mass spectral peak intensity in the A row 49 without the cover of the sampling port.

From each experiment result in FIGS. 14A and 14B, in the case without the cover of the sampling port, it is found that, while the signal can be detected, the mass spectral peak intensity is lower than that in the case with the cover. This may be because the unnecessary wind which is not the supplied wind (from an entire surrounding area of the sampling port) is sucked. Also, due to without the cover, there is a risk that more dusts are sucked. Therefore, by providing the cover, the intake of the unnecessary wind and dusts can be suppressed, so that the collection efficiency can be improved.

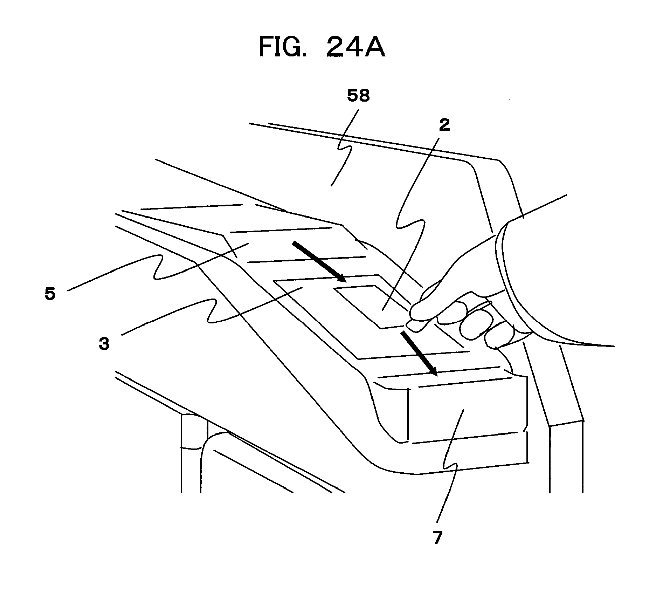

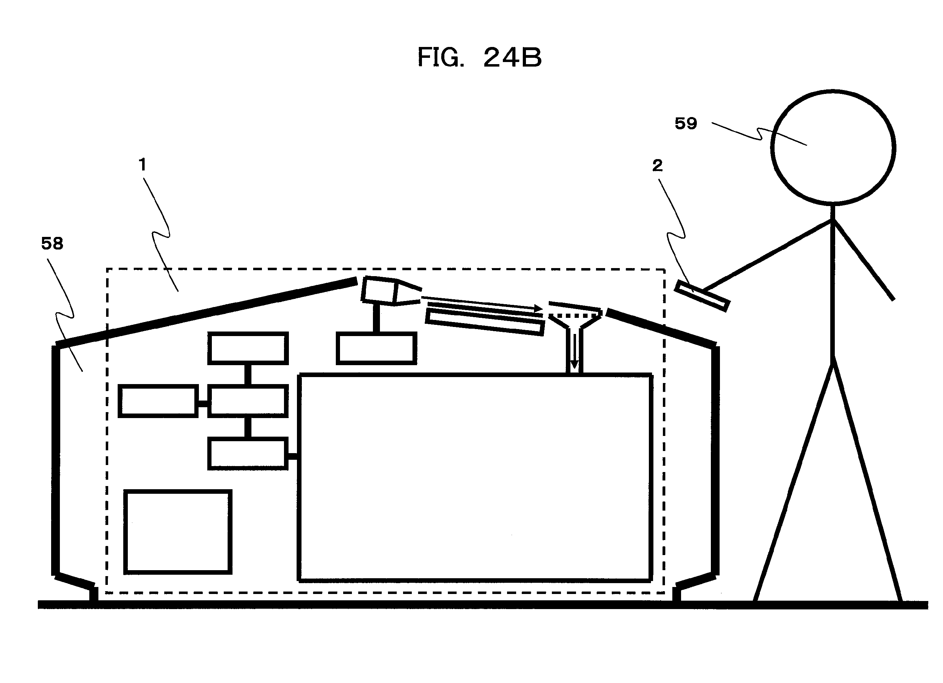

FIG. 24A is a diagram showing an example of an area near the identifying unit in a case that the present invention is applied to the automatic ticket gate. FIG. 24B is a diagram showing an example of an embodiment in the case that the present invention is applied to the automatic ticket gate. As shown in FIGs. 24A and 24B, the detector 1 is provided to an automatic ticket gate 58 for which the identification target 2 (such as an IC card or a mobile phone) can be used. A person 59 passing through can be identified from an ID number assigned to the identification target 2 such as the IC card or the mobile phone, and therefore, the detection history combined with the analyzed result can be easily managed. Here, FIG. 24A shows a case that the blower 5 is arranged in an upper stage and the sampling port 7 is arranged in a lower stage. However, the blower 5 may be arranged in the lower stage and the sampling port 7 may be arranged in the upper stage. The blower 5 and the sampling port 7 may be activated by a human detection sensor provided to the automatic ticket gate.

By installing such a ticket gate in railway or others, the hazardous object or others can be detected with a normal identifying operation. Therefore, the terrorism can be previously prevented without losing the social convenience.

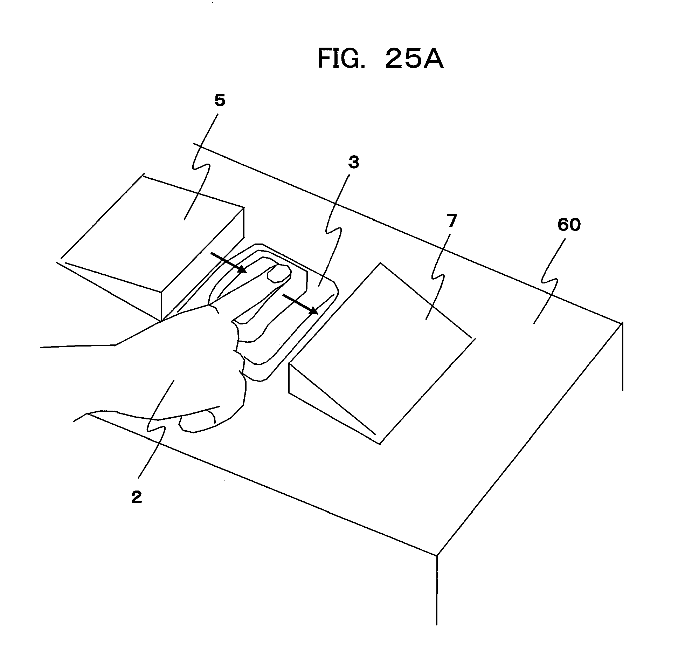

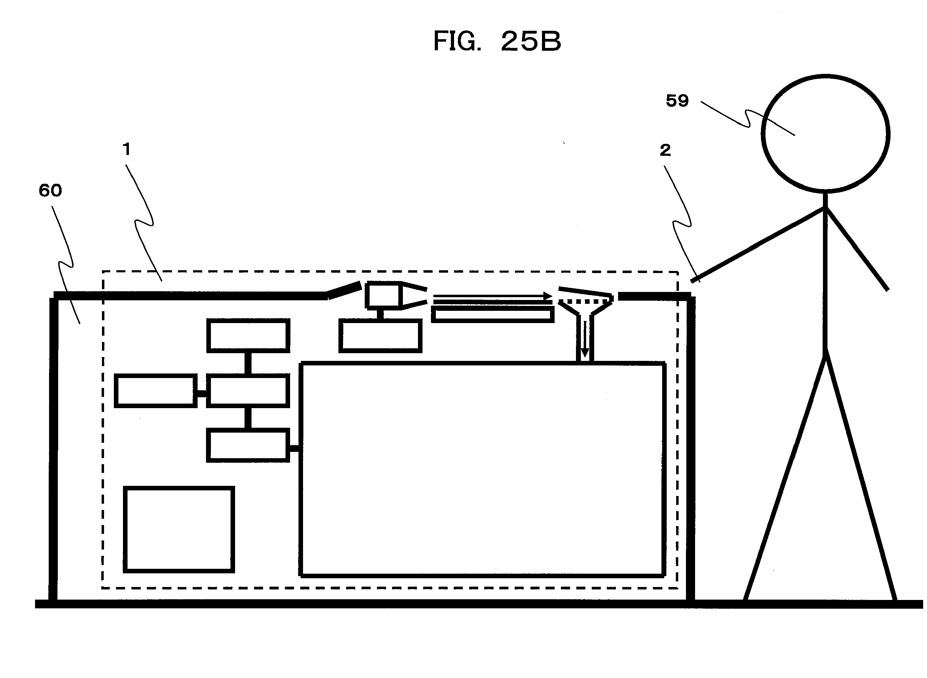

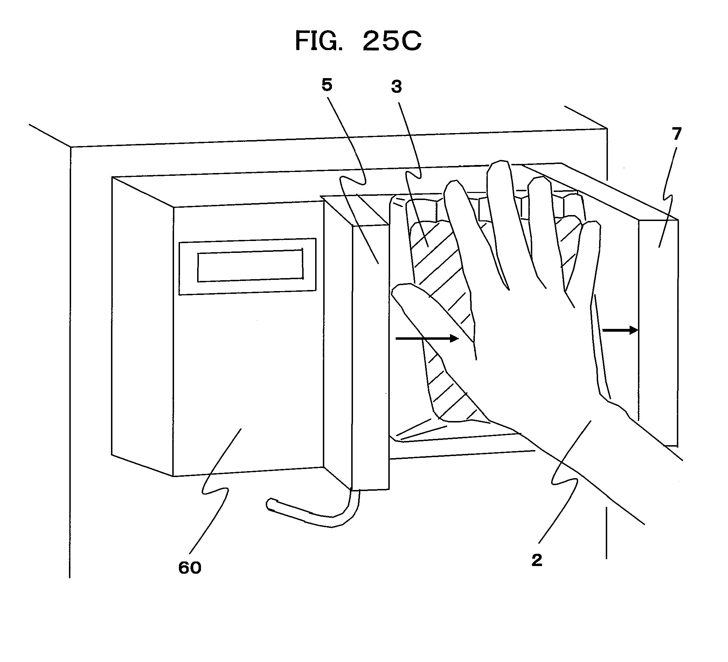

FIG. 25A is a diagram showing an example of the area near the identifying unit (which is horizontally placed) in a case that the present invention is applied to a biometric identification machine. An entire view is shown in FIG. 25B. As shown in FIG. 25C, the present invention can be also applied to a vertically-placed identification. FIG. 25A shows an example in a case that the identification target is a finger, and this example can be applied to, for example, finger vein identification and fingerprint identification. Also, FIG. 25C shows a case that the identification target is palm, and the example can be applied to, for example, palm vein identification.

Note that this shows a case that the blower 5 is arranged on a left side and the sampling port 7 is arranged on a right side. However, the blower 5 may be arranged on the right side and the sampling port 7 may be arranged on the left side.

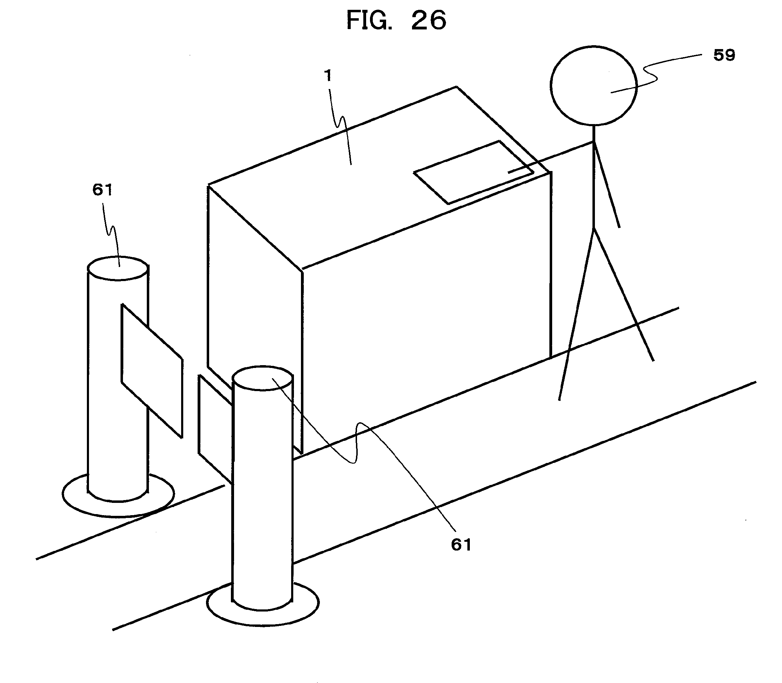

FIG. 26 is a diagram showing an example of the embodiment in a case that the present invention is combined with an opening/closing gate.

In addition to the detector 1 of the present invention, an opening/closing gate 61 is provided. A result from the determining unit provided to the detector is linked to the opening/closing gate. That is, the opening/closing gate 61 is opened or closed as the alarm, so that security can be enhanced. In combination or in separation with the opening/closing control of the gate, the alarm may be issued.

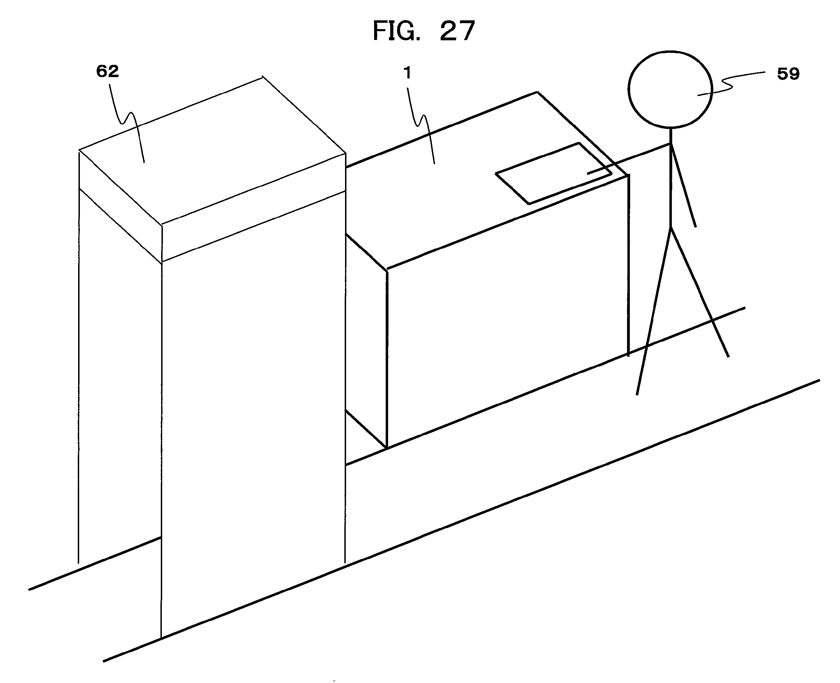

FIG. 27 is a diagram showing an example of the embodiment in a case that the present invention is combined with a metal detector. By combining the detector 1 for the hazardous object or others and a metal detector 62, the risk of terrorism can be further reduced, so that the present invention can contribute to construction of safe and secure society. A position of the metal detector may be arranged either in front or back of the device of the present invention.

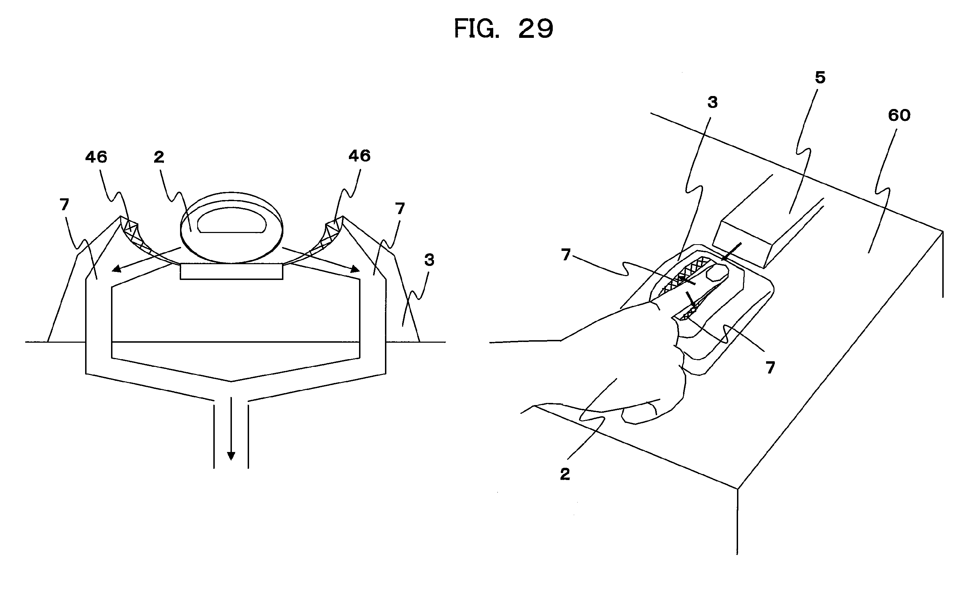

FIG. 29 is a diagram showing an example in a case that the sampling port is arranged right below the identifying unit. By arranging the sampling port 7 right below the identifying unit, obstruction in the moving direction of the identification target 2 can be reduced, and space-saving detection can be achieved. By providing the rough-mesh filter (such as metallic mesh) to the intake gas inlet, the entering of the finger or the foreign substance can be prevented.

### SYMBOL EXPLANATION

1 ... detector, 2 ... identification target, 3 ... identifying unit, 4 ... identification database unit, 5 ... blower, 6 ... air supply control unit, 7 ... sampling port, 8 ... analyzing unit, 9 ... analysis control unit, 10 ... analysis database unit, 11 ... determining unit, 12 ... alarm unit, 13, 14, 15, 16, 17, 18, and 19 ... step, 20 ... suction pump, 21 ... sample introduction pipe, 22 ... ion source, 23 ... pipe heater, 24 ... fine-mesh filter, 25 ... needle electrode, 26 ... extraction electrode, 27a ... first pore electrode, 27b ... second pore electrode, 27c ... third pore electrode, 28a ... first differential evacuation unit, 28b ... second differential evacuation unit, 28c ... high vacuum unit, 29 ... ion trap unit, 30a ... vacuum pump, 30b ...vacuum pump, 31 ... ion guide, 32a ... inlet end electrode, 32b ... outlet end electrode, 33 ... quadrupole rod electrode, 34 ... excitation electrode, 35a ... trap wire electrode, 35b ... extraction wire electrode, 36 ... buffer gas supply source, 37 ... trap area, 38 ... detecting device, 39 ... moving direction of identification target, 40 ... wind direction, 41 ... wind generation source, 42 ... heat generation source, 43 ... hood, 44 ... outlet of hood is formed in slit shape, 45 ... cover, 46 ... rough-mesh filter, 47 ... guide, 48 ... inlet of sampling port is formed in slit shape, 49 ... A row, 50 ... B row, 51 ... C row, 52 ... D row, 53 ... sample, 54 ... outlet of hood is formed in arc shape, 55 ... inlet of sampling port is formed in arc shape, 56 ... tube, 57 ... port, 58 ... automatic ticket gate, 59 ... person, 60 ... biometric identification machine, 61 ... opening/closing gate, 62 ... metal detector

## Claims

1. A detector comprising:
an identifying unit including a surface to which an identification target is moved close;
a blower supplying airflow along the surface;
a sampling port sucking the airflow from the blower;
an analyzing unit analyzing a compound sucked by the sampling port;
a database unit containing ID information and an analysis data;
a determining unit determining an identified result and an analyzed result based on the data of the database unit; and
a control unit performing control in accordance with a determined result of the determining unit.

2. The detector according to claim 1, wherein
the blower supplies air parallely to the surface.

3. The detector according to claim 1, wherein
the airflow from the blower is a laminar flow with respect to the surface.

4. The detector according to claim 1, wherein
a supply air outlet of the blower and an intake gas inlet of the sampling port are arranged so as to face in a parallel direction to the surface.

5. The detector according to claim 1, wherein
the intake gas inlet of the sampling port opens so as to contain a vertical direction to the surface.

6. The detector according to claim 1, wherein
the sampling port is arranged so that the surface is interposed between the identification target and the sampling port.

7. The detector according to claim 1, wherein
the control unit outputs an alarm in accordance with a determined result.

8. The detector according to claim 1, wherein
the control unit drives the blower in synchronization with the identification performed by the identifying unit.

9. The detector according to claim 1, wherein
the control unit includes a flow-rate control unit controlling a flow rate from the blower and/or a flow-rate ratio between the blower and the sampling port.

10. The detector according to claim 1, wherein
the blower includes a heat source adjusting a temperature of the supplied airflow.

11. The detector according to claim 1, wherein
an intake gas inlet of the sampling port is wider than a supply air outlet of the blower.

12. The detector according to claim 1, wherein
a supply air outlet of the blower is formed in a slit shape along the surface.

13. The detector according to claim 1, wherein
a supply air outlet of the blower and/or an intake gas inlet of the sampling port is formed in an arc shape.

14. The detector according to claim 1, wherein
a center of the identifying unit is shifted from a line connecting a center of a supply air outlet of the blower with a center of an intake gas inlet of the sampling port.

15. The detector according to claim 1, wherein
a plurality of the sampling ports are provided.

16. The detector according to claim 1, wherein
the analyzing unit is a mass spectrometer, and the database unit contains a mass spectral data of a predetermined compound as the analysis data.

17. The detector according to claim 1, wherein
the identification target is an identification card.

18. The detector according to claim 1, wherein
the identification target is a biological object.

19. The detector according to claim 1, wherein
an intake gas inlet of the sampling port is formed of a plurality of openings.

20. The detector according to claim 1, wherein
the database unit stores a combined data of the ID information and the analysis data as a detection history.

21. A detector comprising:
a surface to which a measurement target is moved close;
a blower supplying airflow along the surface;
a sampling port sucking the airflow from the blower;
a data getting unit getting a data of the measurement target;
an analyzing unit analyzing a compound sucked by the sampling port;
a database containing an analysis data; and
a determining unit determining an analyzed result based on the data of the database.

22. The detector according to claim 21, wherein
the measurement target is an identification and registration target, and a registration data of the identification and registration target is stored in the database.

23. An entry control system comprising:
an opening/closing gate;
a surface to which a measurement target is moved close;
a blower supplying airflow along the surface;
a sampling port sucking the airflow from the blower;
an analyzing unit analyzing a compound sucked by the sampling port;
a database containing an analysis data;
a determining unit determining an analyzed result based on the data of the database; and
a control unit controlling the opening/closing gate in accordance with a result of the determining unit.
